# EUROPÄISCHE PATENTSCHRIFT

(11) **EP 2 399 334 B1**
(45) Veröffentlichungstag und Bekanntmachung des Hinweises auf die Patenterteilung: **13.04.2016**
(21) Anmeldenummer: 10703841.6
(22) Anmeldetag: 08.02.2010
(51) Int. Cl.: H02K 5/04, H02K 5/20

(54) **TRAKTIONSMOTOR MIT EINEM GEHÄUSE**
TRACTION MOTOR WITH A HOUSING
MOTEUR DE TRACTION AVEC UN CARTER

(30) Priorität: 18.02.2009 DE 102009009518
(43) Veröffentlichungstag der Anmeldung: 28.12.2011
(73) Patentinhaber: Siemens Aktiengesellschaft, 80333 München (DE)
(72) Erfinder: LANGE, Thomas, 90763 Fürth (DE)
(86) Internationale Anmeldenummer: PCT/EP2010/051482
(87) Internationale Veröffentlichungsnummer: WO 2010/094589

(56) Entgegenhaltungen:
- EP-A1- 0 048 213
- DE-A1- 1 538 993
- DE-A1- 10 247 310
- DE-U1- 29 714 614
- US-A- 4 516 044
- US-A1- 2004 012 284

## Beschreibung

Die Erfindung betrifft einen Traktionsmotor mit einem Gehäuse, das ein Statorblechpaket drehfest umfängt.

Bei dynamoelektrischen Maschinen wird bei einigen Ausführungsformen das Statorblechpaket in einem Gehäuse angeordnet. Damit ergeben sich Befestigkeitsprobleme, da die Werkstoffe der Gehäuse und die Werkstoffe der Statorbleche unterschiedliche Temperaturausdehnungskoeffizienten aufweisen und somit eine Fixierung des Statorblechpakets im Gehäuse erschwert wird. Dies spielt insbesondere bei größeren Durchmessern des Statorblechpakets eine Rolle, da sich dann die unterschiedlichen thermischen Ausdehnungskoeffizienten in einer Größenordnung bemerkbar machen, die Gehäuse und/oder Statorblechpaket beeinträchtigen können.

Nachteilig ist insbesondere, dass eine übermäßiger Erwärmung des Statorblechpakets, z.B. bei im Betrieb der dynamoelektrischen Maschine bei zusätzlicher Kühlung des Gehäuses gegebenenfalls zu einer Sprengung oder plastischen Verformung dieses Gehäuses führt. Des Weiteren kann eine starke Erwärmung des Gehäuses oder der ganzen dynamoelektrischen Maschine ein Rutschen der Maschine innerhalb des Gehäuses zur Folge haben, da der Pressverband als solcher nicht mehr ausreichend drehfest auf das Statorblechpaket einwirkt.

Um dieses Problem zu beheben, wird meistens als Gehäusewerkstoff ein Eisenwerkstoff eingesetzt. Nachteile bezüglich der Festigkeit, des Gewichts und der Wärmeabfuhr werden dabei billigend in Kauf genommen.

Aus der DE 26 23 493 A ist ein Elektromotor mit einem Gehäuse bekannt, bei dem der Gehäusekörper auf einer Seite einen axial durchgehenden Einschnitt aufweist, über den eine Pressung auf das Statorblechpaket ausgeführt werden kann.

Aus der DE 24 32 178 ist ein aus Aluminium gegossener Gehäusemantel für ein Statorblechpaket bekannt, wobei mittels eines U-förmigen Klammerelements eine Spannung erreicht wird.

Aus der US 4 244 098 ist ein segmentiertes Kühlelement, bekannt, das über Klammern an einem Statorblechpaket fixiert und der Verbesserung der Kühlung dienen soll.

Aus der DE 37 10 048 ist ein Rohrgehäuse für einen Elektromotor, mit das Rohrgehäuse umgebender sowie daran festliegender Mantelschale bekannt, die sich gegen den Umfang des Gehäuses abstützt, wobei die Mantelschale sich gegen den Umfang des Rohrgehäuses mittels rippenartiger aus dem Schalenkörper der Mantelschale vorwärts herausgeformte Halteorgan abstützt, die zwischen sich Mantelräume bilden. Damit soll eine verbesserte Kühlwirkung der elektrischen Maschine geschaffen werden.

Aus der DE 102 47 310 A1 ist eine elektrische Maschine mit einem Gehäuse bekannt, das einen Ständer und einen Läufer der elektrischen Maschine gegen die Umgebung kapselt, wobei einem Lüfter mit dem ein erster Kühlmittelstrom zur Kühlung des Gehäuses an einer Außenwand des Gehäuses vorbei und/oder in Kanälen des Gehäuses bewegbar ist, wobei mit dem Lüfter gleichzeitig auch ein zweiter Kühlmittelstrom im Inneren des Gehäuses zur Eigendurchzugsbelüftung bewegbar ist.

Aus der EP 0 048 213 A1 ist ein Motorgehäuse in Form eines den Stator umgebenen rohrartigen Mantels bekannt, von dessen Außenseite gegebenenfalls radiale Kühlrippen abragen, wobei der Mantel querschnittlich aus wenigstens zwei Schalenteilen zusammengesetzt ist.

Aus der DE 15 38 993 ist ein geteiltes Gehäuse einer großen elektrischen Maschine bekannt, bei dem die einzelnen Teile an den Trennstellen mit bearbeiteten Flächen zur Zentrierung und Verbindung versehen sind, wobei die Begrenzungswände der Gehäuseteile unbearbeitet sind und gegenseitig nicht zur Anlage gelangen und dass in ihnen Löcher zur Aufnahme zusätzlicher bearbeiteter Verbindungselemente vorgesehen sind, welche die Gehäuseteile gegenseitig zentrieren.

Aus der DE 297 14 614 U1 ist eine elektrische Maschine mit einem Maschinengehäuse aus Metallguss und einer in das Maschinengehäuse eingegossenen wendelförmigen Kühlrohrschlange bekannt mit wenigstens zwei Anschlussenden, wobei die Wendeln der Kühlrohrschlange gegeneinander auf Abstand fixiert sind.

Nachteilig dabei ist jeweils, dass entweder kein ausreichender Presssitz geschaffen wird oder dass die oben ausgeführten Problematiken bezüglich der unterschiedlichen Temperaturdehnung, insbesondere bei größeren dynamoelektrischen Maschinen, mit einem Durchmesser des Statorblechpaket größer 250 mm durch die dargestellten Ausführungen im Stand der Technik nicht behoben werden können.

So ist aus der EP 0 806 830 A2 ein Gehäuse für eine elektrische Maschine bekannt, dass in Umfangsrichtung eine geschlossene Kontur aufweist und auf ein Blechpaket aufschiebbar ist, wobei das Gehäuse mindestens eine in Umfangsrichtung elastische Dehnungsstelle aufweist.

Damit wird ebenfalls versucht, bei einem ausreichenden drehfesten Presssitz eine Temperaturkompensation zu erhalten. Derartige Gehäuse können aber insbesondere nur für kleinere Maschinen hergestellt werden.

Ausgehend vom Stand der Technik liegt der Erfindung die Aufgabe zugrunde, ein Gehäuse für eine dynamoelektrische Maschine zu schaffen, die einen ausreichenden Presssitz eines Statorblechpakets innerhalb des Gehäuses ermöglicht, insbesondere auch bei unterschiedlichen Temperaturen eine ausreichende Fixierung des Ständerblechpakets, insbesondere eines Traktionsmotors im Gehäuse gewährleistet.

Des Weiteren soll durch das Gehäuse eine gleichzeitige Abdichtung und die Möglichkeit der Fixierung des Gehäuses der dynamoelektrischen Maschine in einem Einbauraum geschaffen werden.

Des Weiteren soll die dynamoelektrische Maschine eine ausreichende Kühlleistung auch in einem Einbauraum aufweisen.

Die Lösung der gestellten Aufgabe gelingt durch einen Traktionsmotor mit den Merkmalen des Anspruchs 1.

Damit ist es nun möglich, insbesondere auch im Bereich der Traktionsmotoren Aluminiumgehäuse einzusetzen, die hinsichtlich Wärmeabfuhr und Gewicht die günstigeren Wärmestoffeigenschaften aufweisen.

Dennoch wird eine Sprengung des Gehäuses der dynamoelektrischen Maschine bei Verwendung als Traktionsmotor vermieden, da durch die erfindungsgemäße Gestaltung des Gehäuses auch hohe Temperaturgradienten beherrscht werden.

Dadurch, dass das Gehäuse in Umfangsrichtung betrachtet, einzelne Segmente aufweist, ist ein derartiges Gehäuse auch für große Durchmesser eines Statorblechpakets möglich, da je nach Durchmesser des Statorblechpakets zwei, drei, vier oder mehrere Segmente herstellbar sind, die sich vorteilhafterweise durch ein Strangpressverfahren herstellen lassen.

Die zusammengesetzten Segmente des Gehäuses bilden einen kraftschlüssigen Presssitz des Statorblechpakets, über welchen sich beispielsweise das Motormoment abstützt.

Des Weiteren dient das Gehäuse der Aufhängung der dynamoelektrischen Maschine.

Diese Segmente sind identisch aufgebaut, so dass jeweils nur eine Segmentvariante hergestellt werden muss, um ein vollständiges Gehäuse für eine dynamoelektrische Maschine zu schaffen.

Des Weiteren lässt sich durch den erfindungsgemäßen, segmentierten Aufbau des Gehäuses ein kostengünstig und gut wärmeleitfähiges Material verwenden, das nicht unbedingt dem Material und damit dem Wärmeausdehnungskoeffizient des Statorblechpakets entsprechen muss. Demzufolge eignen sich besonders Aluminium-Strangpressprofile. Diese Strangpressprofile weisen an den Bereichen, mit denen sie mit ihrem benachbarten Segment zusammenwirken, eine Fuge auf, die über die gesamte axiale Länge der zusammenwirkenden Segmente bzw. des Gehäuses verläuft.

Diese Fuge weist vorteilhafterweise an den sich gegenüberliegenden Flächen der benachbarten Segmente Mittel zur Abdichtung der Fuge auf. Diese Mittel zur Abdichtung können insbesondere als Labyrinthdichtung ausgebildet sein, ebenso ist es möglich, dass ein Segment durch eine Nase in einen dazu korrespondierenden Hintergriff des benachbarten Segments greift und dadurch ebenso eine labyrinthähnliche Wirkung erzielt.

Ergänzend zu den Möglichkeiten der Abdichtung der Fuge, sind zusätzlich gegebenenfalls Gummilippen einsetzbar, die auch bei unterschiedlichen Temperaturen weder zur Sprengung noch zum Rutschen des Statorblechpakets innerhalb des Gehäuses führen.

Diese Gummilippen der benachbarten Segmente liegen Stoß auf Stoß oder überlappen sich gegenseitig.

Die Außenkontur eines jeden Profils weist zumindest abschnittsweise Noppen auf, die eine Befestigung des Segments und damit des gesamten Gehäuses der dynamoelektrischen Maschine in einem Einbauraum ermöglichen. Bei diesen Noppen handelt es sich um Materialanhäufungen an den Segmenten, die beispielsweise den Eingriff eines Gewindes ermöglichen.

Die Verbindung der einzelnen Segmente über ihre Fugen erfolgt über Spannelemente, insbesondere Schrauben, die über Montageaussparungen und Durchgangslöcher miteinander verbunden sind.

D.h. eine Schraube wird über eine Montageaussparung eines Segments durch die korrespondierenden Durchgangslöcher benachbarter Segmente gesteckt und durch eine Mutter auf der Gegenseite ebenfalls in einer Montageaussparung gekontert. Damit verbleibt zwischen den verbundenen Segmenten eine Dehnungsfuge, die ein "Atmen" des Gehäuses ermöglicht. Die Gestaltung der Verschraubung erlaubt somit eine Einflussnahme auf die radiale Steifigkeit auf das Wärmedehnverhalten in dem die Anzahl der Spannungsquerschnitte und die Klemmlänge der Schrauben berücksichtigt werden.

Über das Anzugsmoment der Muttern an den Schrauben kann die Pressung des Statorblechpakets beeinflusst werden.

Die Erfindung sowie weitere vorteilhafte Ausgestaltungen der Erfindungen sind den Ausführungsbeispielen in den prinzipiell dargestellten Zeichnungen zu entnehmen. Darin zeigen:
- FIG 1: einen Querschnitt einer dynamoelektrischen Maschine,
- FIG 2: eine perspektivische Darstellung eines Gehäuses,
- FIG 3: eine Seitenansicht eines Gehäuses,
- FIG 4, 10: eine Detaildarstellung der Fuge,
- FIG 5: einen Querschnitt eines Segments,
- FIG 6, 7: perspektivische Darstellungen eines Segments,
- FIG 8: eine Seitendarstellung eines Segments,
- FIG 9: Seitenansicht eines Traktionsmotors,
- FIG 11: Noppenverbindung.

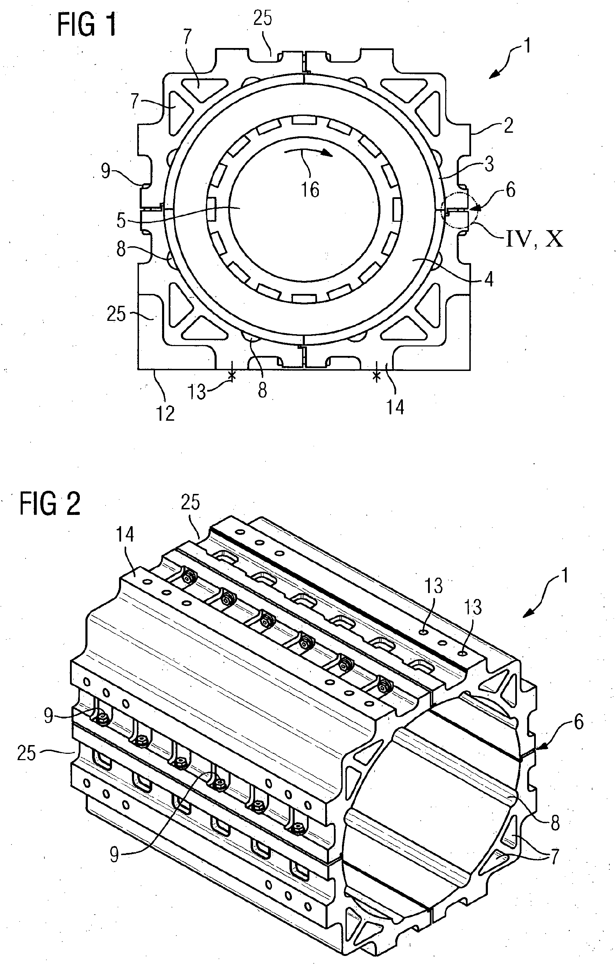

FIG 1 zeigt einen Querschnitt einer dynamoelektrischen Maschine, bei der ein Gehäuse 1 mehrere Teile aufweist, in diesem Fall in vier Segmente 2, die in Umfangsrichtung angeordnet sind. Die Segmente 2 verlaufen in axialer Richtung und erstrecken sich zumindest über die axiale Länge eines Statorblechpakets 3, das sie umfassen und mit dem sie einen Presssitz bilden. In dem Statorblechpaket 3 ist ein Wicklungssystem 4 angeordnet, das in nicht näher dargestellten Nuten des Statorblechpakets positioniert ist.

Durch elektromagnetische Wechselwirkung mit einem Rotor 5 tritt eine Rotation 16 des Rotors 5 in der gezeigten Pfeilrichtung auf. Das Gehäuse 1 ist in dem vorliegenden Ausführungsbeispiel durch vier identische Segmente 2, die als Aluminium-Strangpressprofil ausgeführt sind, ausgebildet. Jedes Segment 2 weist dabei in einer besonders vorteilhaften Ausgestaltung jeweils in seiner Ecke zwei Kühlkanäle 8 mit offener Kontur auf, ebenso wie zwei Kühlkanäle 7 mit geschlossener Kontur. Die Kühlkanäle 8 sind dabei offen zum Statorblechpaket 3. Die Kühlkanäle 7,8 sind dabei innerhalb der Segmente 2 so angeordnet, dass sich eine über den Umfang betrachtet gleichmäßige Temperaturverteilung einstellt und dass innerhalb des Segments 2 Materialanhäufungen soweit als möglich vermieden werden.

Ebenso weist jedes Segment 2 äußere Noppen 14 auf, die eine Befestigung des gesamten Gehäuses 1 über geeignete Mittel in einem Einbauraum 12 erlauben. Die einzelnen Segmente 2 werden vorteilhafterweise über Schraubverbindungen miteinander befestigt, wobei über Montageaussparungen 15 in den jeweiligen. Segmente 2 das Einsetzen der Schrauben 9 und der Durchgriff über Durchgangslöcher 11 in das nächste Segment 2 ermöglichen. Dort wiederum kann in einer Montageaussparung durch eine Mutter 10 die Schraubverbindung gekontert werden.

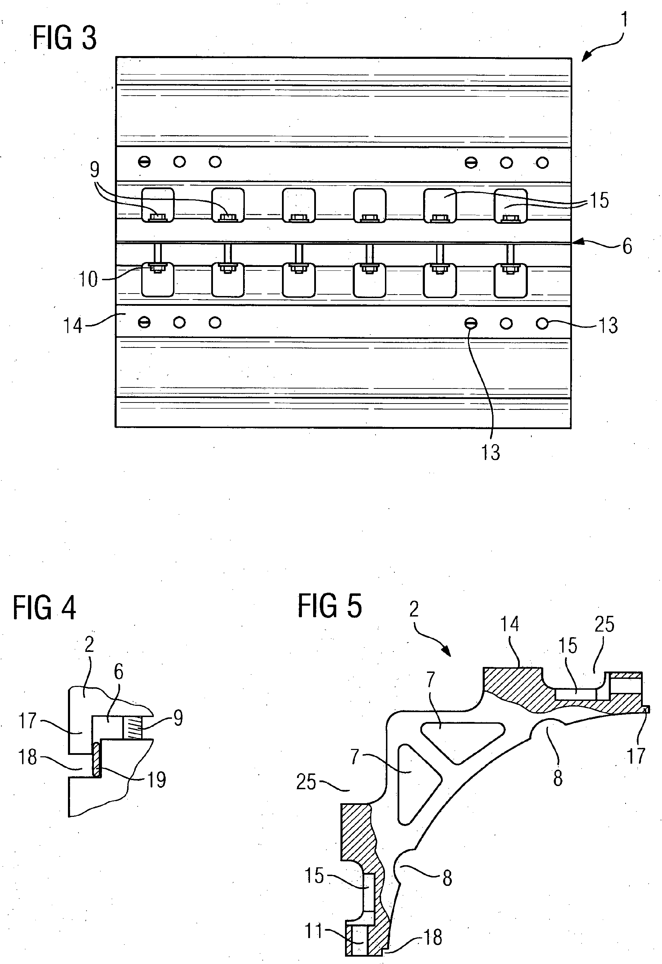

Über die Anzahl der Schraubverbindungen kann der Presssitz und die radiale Steifigkeit des Gehäuses 1 eingestellt werden. Über diesen kraftschlüssigen Presssitz stützt sich das Motormoment ab. Zwischen benachbarten Segmenten 2 ist eine Fuge 6 ausgebildet, über die sich die Schraubverbindung zwischen den Segmenten 2 erstreckt. Vorteilhafterweise ist diese Fuge 6 durch Mittel abgedichtet, wie sie beispielsweise in FIG 4 dargestellt sind. Dabei weist ein Segment 2 eine Nase 17 auf, die in zusammengebautem Zustand in einen Hintergriff 18 des benachbarten Segments 2 eingreift. Damit ergibt sich in einfacher Art und Weise eine ausreichende Abdichtung, so dass Staub und Schmutz nicht direkt in das Statorblechpaket 3 gelangen können. Für eine weitere Abdichtung kann diese Fuge 6 auch labyrinthähnlich ausgebildet werden, um die Dichtwirkung weiter zu verbessern.

Alternativ oder ergänzend dazu kann in dieser Fuge 6 auch ein dauerelastisches Flüssigdichtmittel, beispielsweise Silikon eingesetzt werden.

Stirnseitig wird dann die elektrische Maschine durch geeignete Deckel, insbesondere Lagerschilde abgeschlossen.

Vorteilhafterweise sind in der Fuge auch Gummileisten vorstellbar.

Durch die Kühlkanäle 8 und 7 stellt sich ein in axialer Richtung ausgebildeter Kühlluftstrom ein, der gleichzeitig über die Kühlkanäle 8 mit offener Kontur das Statorblechpaket 3 kühlt und zusätzlich eine Kühlungsunterstützung durch die Kühlkanäle 7 mit geschlossener Kontur erhält. Eine Vergleichmäßigung über den Gehäuseumfang stellt sich dann ein, wenn die Querschnittsfläche der Kühlkanäle 7 zumindest doppelt so groß ist wie die Querschnittsfläche der Kühlkanäle 8.

Wenn das Gehäuse 1 mit seiner dynamoelektrischen Maschine in einem Einbauraum 12 angeordnet ist, ergeben sich dort die ebenfalls weitere axiale Kühlkanäle zwischen der Außenkontur des Gehäuses 1 und dem Einbauraum 12.

FIG 2 zeigt in perspektivischer Darstellung ein Gehäuse 1, das ebenfalls aus vier Segmente 2 gebildet ist, wobei dort erneut die Kühlkanäle 7, 8 als auch die Mittel zur Befestigung im Einbauraum 12 dargestellt sind. Ebenso sind die Schrauben 9 in ihren Montageaussparungen 15 sichtbar.

FIG 3 zeigt in einer Seitenansicht über die gesamte axiale Länge des Gehäuses 1, wobei in dieser Darstellung zwei Segmente 2 sichtbar sind, die durch die Schraubverbindungen in den Montageaussparungen über die Durchgangslöcher 11 miteinander verbunden sind.

FIG 4 zeigt eine Detaildarstellung der Verbindungsstelle zweier Segmente 2. Dabei greift die Nase 17 des einen Segments in einen dafür vorgesehen Hintergriff 18 des anderen Segments ein. Damit wird normalerweise eine ausreichende Dichtwirkung des Gehäuses 1 erzielt. Um die Dichtwirkung zu verbessern sind zumindest an einer Seite der Fuge 6 Dichtlippen 19, z.B. aus Silikon an einem Segment 2 angebracht.

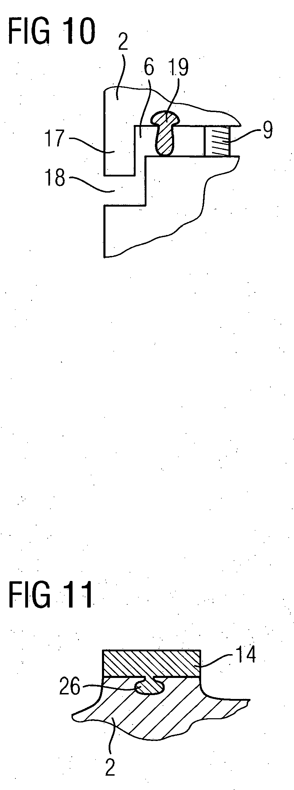

Eine alternative Anordnung der Dichtlippe 19 ist der FIG 10 zu entnehmen. Dabei wird eine Dichtlippe 19 in einer dafür vorgesehen Ausnehmung des Segments 2 positioniert, insbesondere eingequetscht und dichtet damit im zusammengebauten Zustand des Gehäuses 1 die Fuge 6 ab.

Somit stellt sich auch bei "Atmen" des Gehäuses 1 eine ausreichende Dichtwirkung ein, da sich die Dichtlippen, z.B. aus dauerelastischem Flüssigdichtmittel ausdehnen und zusammenpressen lassen.

FIG 5 zeigt in einer Querschnittsdarstellung ein Segment 2 mit den Kühlkanälen 7, 8 als auch den Noppen 14 und die Montageaussparungen 15. Des Weiteren sind die Durchgangslöcher 11 zu sehen, in der sich der Schaft der Schraube 9 befindet.

Die Durchgangslöcher 11 weisen einen größeren Durchmesser als der Schraubenschaft auf.

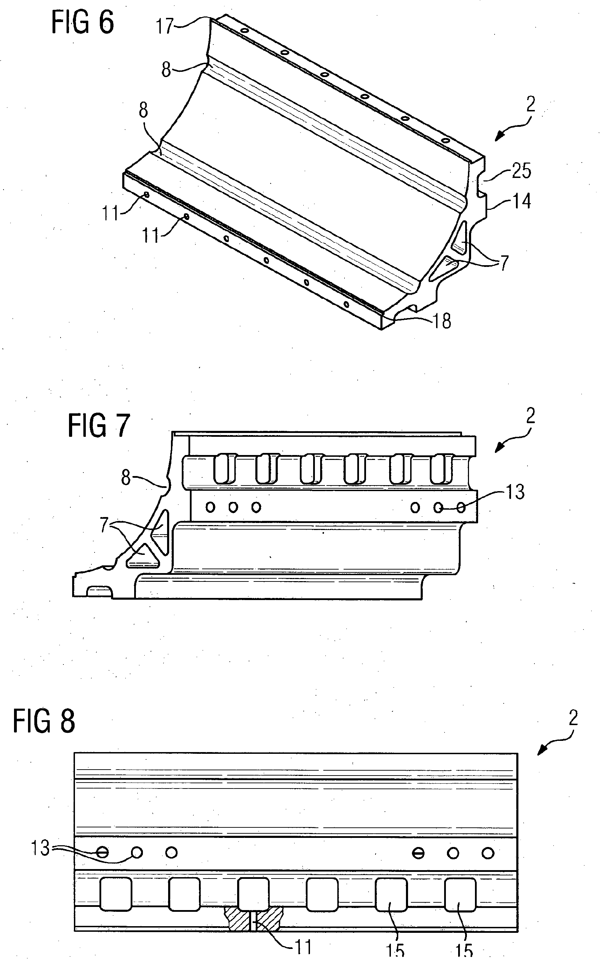

Die FIG 6 und 7 zeigen in einer perspektivischen Darstellung ein Segment 2, wobei wiederum die Kühlkanäle 7, 8 als auch die Durchgangslöcher 11 und die Noppen 14 eindeutig zu sehen sind. Ebenso sind die Nasen 17 und der Hintergriff 18 auszumachen.

FIG 8 zeigt in einer Seitendarstellung ein Segment 2, bei dem erneut die Montageaussparungen 15 und die Durchgangslöcher 11 eindeutig zu sehen sind.

Das Gehäuse 1 besteht somit aus einzelnen Segmenten 2, die miteinander verschraubt sind. Über diese Verschraubung ist eine direkte Einflussnahme auf die radiale Steifigkeit und auf das Wärmedehnverhalten einzustellen. Über das Anzugsmoment der Mutter auf den Schraubenschaft der Schraube 9 wird der Presssitz der Segmente 2 auf das Statorblechpaket 3 beeinflusst. Zwischen den einzelnen Segmenten 2 ist eine Fuge 6, die somit ein "Atmen" des Gehäuses 1 ermöglicht.

Demzufolge sind, insbesondere bei größeren dynamoelektrischen Maschinen, wie z.B. Traktionsmotoren, d.h. bei einem Durchmesser des Statorblechpakets 3 von größer 250mm Sprengungen des Gehäuses 1 oder Rutschen des Stätorblechpakets 3 im Gehäuse 1 nicht mehr möglich.

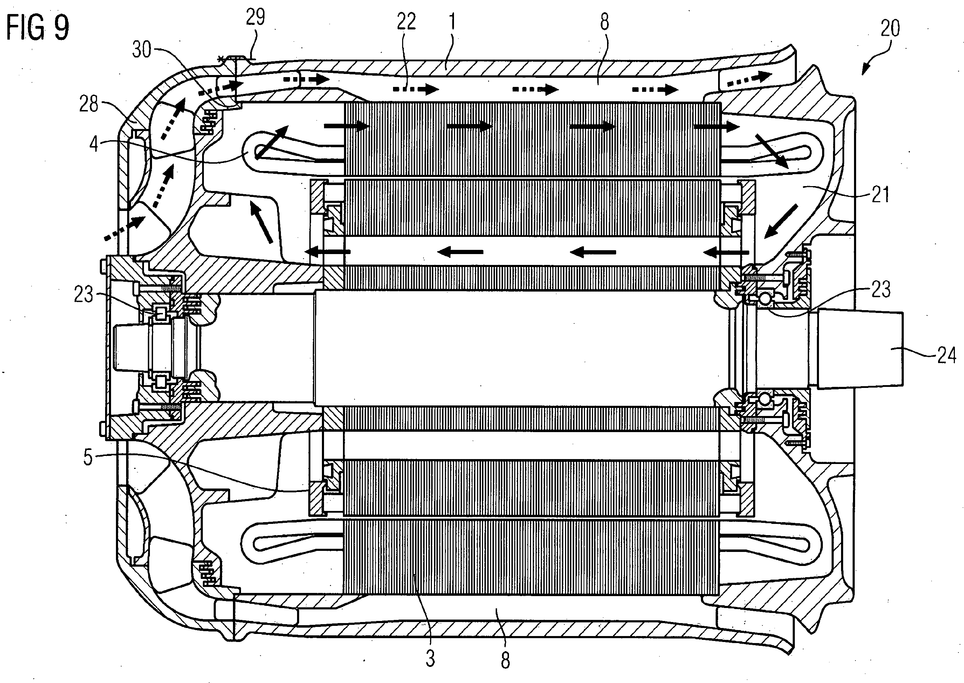

FIG 9 zeigt in einem Längsschnitt eine Seitenansicht eines Traktionsmotors 20, der einen abgeschlossene inneren Kühlkreislauf 21 und einen äußere Kühlung 22 zeigt. Die innere Kühlung ist vorzugsweise eine Luftkühlung, die insbesondere die Wickelköpfe des Stators, den Rotor, das Statorblechpaket 3 und ggf. die Lager 23 kühlt. Die Wärme wird außer über das Gehäuse 1 auch über zu den Kühlkanälen parallel verlaufenden Kanälen im Stator nach außen abgibt.

Die äußere Kühlung 22 über die Kanäle 7 ist im vorliegenden Fall eine Luftkühlung. Diese Kanäle können aber ebenso Teil eines Flüssigkeitskühlkreislaufs sein.

Der Traktionsmotor 20 treibt über eine Welle 24, die mit dem Rotor 5 drehfest verbunden ist über ein nicht näher dargestelltes Getriebe oder direkt ein Rad oder ein Radsatzwelle an.

Der Rotor 5 ist dabei wie in FIG 9 prinzipiell dargestellt ein Kurzschlussläufer. Der Rotor kann aber auch als Permanentmagnetläufer mit innenliegenden oder an der Oberfläche befindlichen Magneten ausgebildet sein.

Über die Noppen 14 ist eine definierte Einbaulage in einem Drehgestell eines Triebfahrzeugs möglich. Die Noppen 14 bilden dabei mit ihrem Segment ein einstückiges Teil.

In einer weiteren Ausführungsform gemäß FIG 11 sind die Noppen 14 aus einem anderen Material als das Segment 2. Vorzugsweise werden dämpfende Noppen 14 beispielsweise aus Gummi auf der Oberfläche des Segments 2 befestigt, insbesondere in eine Ausnehmung des Segments eingequetscht oder eingeschnappt. Je nach Materialausgestaltung der Noppen 14 wird dabei neben einer Schwingungsdämpfung zusätzlich das "Atmen" des Gehäuses 1 in einem vorgegebenen Einbauraum 12 gestattet.

Außerdem bilden die Noppen 14 in Ihrem axialen Verlauf über das Gehäuse 1 insbesondere in einem Einbauraum zusätzliche außen am Gehäuse 1 liegende Kühlnuten 25.

Lagerschilde 27 oder Deckel 28 sind derart gestaltet, dass sie eine "Atmung" des Gehäuses 1 nicht behindern. Dennoch werden die Funktionen dieser Elemente am Gehäuse 1 durch die "Atmung" nicht beeinträchtigt, da die Befestigungsmittel 29 und die Abdichtungsmittel 30 zwischen dem Gehäuse 1 und den Lagerschilden 27 und dem Deckel 28 dazu ausgelegt sind.

## Patentansprüche

1. Traktionsmotor (20) mit einem Gehäuse (1), das geschlossene und/oder offene Kühlkanäle zur Kühlung eines innerhalb der dynamoelektrischen Maschine vorhandenen geschlossenen Luftkühlkreislaufs aufweist, **dadurch gekennzeichnet, dass** ein Statorblechpaket (3) einen Durchmesser größer 250mm aufweist, wobei das Gehäuse (1) in Umfangsrichtung einzelne identische Segmente (2) aufweist, die zusammengesetzt einen kraftschlüssigen Presssitz des Statorblechpakets (3) bilden, wobei die axiale Länge der einzelnen Segmente (2) zumindest der axialen Länge des Statorblechpakets (3) entspricht, wobei zwischen zwei aneinandergesetzten Segmenten (2) eine axial verlaufende Fuge (6) ausgebildet ist, wobei an den die Fuge (6) bildenden sich gegenüberliegenden Flächen der beiden angrenzenden Segmente (2) Mittel zur Abdichtung der Fuge (6) vorgesehen sind, wobei die einzelnen Segmente (2) über ihre Fugen (6) durch Spannelemente, insbesondere Schrauben (9), in Montageaussparungen und Durchgangslöcher (11) miteinander verbunden sind, wobei Noppen (14) in den jeweiligen Segmenten (2) vorhanden sind, die einen Eingriff eines Gewindes ermöglichen.

2. Traktionsmotor (20) nach Anspruch 1, **dadurch gekennzeichnet, dass** die Mittel zur Abdichtung der Fuge (6) mittels eines Segments (2) mit Nase (17), die in einen dazu korrespondierenden Hintergriff (18) des benachbarten anderen Segments (2) greift, realisiert ist.

3. Traktionsmotor (20) nach Anspruch 1, **dadurch gekennzeichnet, dass** die Mittel zur Abdichtung der Fuge (6) zwischen den Segmenten (2) als Labyrinthdichtung ausgebildet sind.

4. Traktionsmotor (20) nach einem der vorhergehenden Ansprüche, **dadurch gekennzeichnet, dass** die Segmente (2) als identische Strangpressprofile ausgebildet sind.

5. Traktionsmotor (20) nach einem der vorhergehenden Ansprüche, **dadurch gekennzeichnet, dass** die jeweilige Außenkontur der Segmente (2) zumindest zwei Noppen (14) aufweist, die eine Befestigung des Gehäuses in einem Einbauraum (12) ermöglichen.

6. Traktionsmotor (20) nach Anspruch 1, **dadurch gekennzeichnet, dass** der Traktionsmotor (20) ein Rad oder eine Radsatzwelle direkt oder über ein Getriebe antreibt.

## Claims

1. Traction motor (20) with a housing (1) which has closed and/or open cooling ducts for cooling a closed air cooling circuit present within the dynamoelectric machine, **characterised in that** a stator laminated core (3) has a diameter of greater than 250 mm, wherein the housing (1) has individual, identical segments (2) in the peripheral direction, which, when combined, form a force-fit press fit of the stator laminated core (3), wherein the axial length of the individual segments (2) corresponds at least to the axial length of the stator laminated core (3), wherein an axially running joint (6) is embodied between two fitted segments (2), wherein means for sealing the joint (6) are provided on the opposing surfaces of the two adjacent segments (2) which form the joint (6), wherein the individual segments (2) are connected to one another in assembly recesses and clearance holes (11) by way of their joints (6) by means of clamping elements, in particular screws (9), wherein burls (14) are present in the respective segments (2), which allow engagement of a thread.

2. Traction motor (20) according to claim 1, **characterised in that** the means for sealing the joint (6) is realised by means of a segment (2) with a lug (17), which engages into a tongue and groove (18) of the adjacent other segment (2) which corresponds thereto.

3. Traction motor (20) according to claim 1, **characterised in that** the means for sealing the joint (6) between the segments (2) are embodied as a labyrinth seal.

4. Traction motor (20) according to one of the preceding claims, **characterised in that** the segments (2) are embodied as identical extruded profiles.

5. Traction motor (20) according to one of the preceding claims, **characterised in that** the respective outer contour of the segments (2) has at least two burls (14), which allow the housing to be fastened in an installation space (12).

6. Traction motor (20) according to claim 1, **characterised in that** the traction motor (20) drives a wheel or a wheelset shaft directly or by way of a gearing.

## Revendications

1. Moteur ( 20 ) de traction ayant un carter ( 1 ) qui a des canaux de refroidissement fermés et/ou ouverts pour le refroidissement d'un circuit fermé de refroidissement par de l'air présent à l'intérieur de la machine dynamoélectrique, **caractérisé en ce qu'**un paquet ( 3 ) de tôles statoriques a un diamètre plus grand que 250 mm, le carter ( 1 ) ayant, dans la direction périphérique, des segments ( 2 ) individuels identiques qui, rassemblés, forment un ajustement serré à complémentarité de force du paquet ( 3 ) de tôles statoriques, la longueur axiale des segments ( 2 ) individuels correspondant au moins à la longueur axiale du paquet ( 3 ) de tôles statoriques, un joint ( 6 ) s'étendant axialement étant constitué entre deux segments ( 2 ) successifs, dans lequel, sur les surfaces opposées formant le joint ( 6 ) des deux segments ( 2 ) voisins, il est prévu des moyens pour rendre le joint ( 6 ) étanche, les segments ( 2 ) individuels étant sur leur joint ( 6 ) reliés entre eux par des éléments de serrage, notamment par des vis ( 9 ), dans des évidements de montage et des trous ( 11 ) traversant, des bossages ( 14 ) étant présents dans les segments ( 2 ) et permettant une prise d'un filetage.

2. Moteur ( 20 ) de traction suivant la revendication 1, **caractérisé en ce que** les moyens pour rendre étanche les joints ( 6 ) sont réalisés au moyen de segments ( 2 ) ayant un bec ( 17 ) qui pénètre dans un contre-bec ( 18 ) y correspondant de l'autre segment ( 2 ) voisin.

3. Moteur ( 20 ) de traction suivant la revendication 1, **caractérisé en ce que** les moyens pour rendre étanche les joints ( 6 ) sont constitués entre les segments ( 2 ) sous la forme de joint à labyrinthe.

4. Moteur ( 20 ) de traction suivant l'une des revendications précédentes, **caractérisé en ce que** les segments ( 2 ) sont constitués sous la forme de profilés filés à la presse identiques.

5. Moteur ( 20 ) de traction suivant l'une des revendications précédentes, **caractérisé en ce que** le contour extérieur des segments ( 2 ) a au moins deux bossages ( 14 ) qui rendent possible une fixation du carter dans un espace ( 12 ) de montage.

6. Moteur ( 20 ) de traction suivant la revendication 1, **caractérisé en ce que** le moteur ( 20 ) de traction entraîne une roue ou un arbre d'essieu directement par l'intermédiaire d'une transmission.
